# FASCICULE DE BREVET EUROPEEN

(11) **EP 0 691 472 B1**
(45) Date de publication et mention de la délivrance du brevet: **07.01.1999**
(21) Numéro de dépôt: 95401470.0
(22) Date de dépôt: 21.06.1995
(51) Int. Cl.: F02M 59/10, F02B 13/10

(54) **Moteur à combustion interne ayant un réservoir de stockage de pression d'utilisation spécifique**
Brennkraftmaschine mit Druckbehälter für spezifische Anwendungen
Internal combustion engine with pressure tank for specific purposes

(30) Priorité: 08.07.1994 FR 9408602
(43) Date de publication de la demande: 10.01.1996
(73) Titulaire: INSTITUT FRANCAIS DU PETROLE, 92500 Rueil Malmaison (FR)
(72) Inventeur: Duret, Pierre, F-78200 Sartrouville (FR)

(56) Documents cités:
- EP-A- 0 189 716
- DE-C- 4 129 574
- FR-A- 2 662 214
- PATENT ABSTRACTS OF JAPAN vol. 8 no. 43 (M-279) [1480] ,24 Février 1984 & JP-A-58 197426 (OSAMU ITOU) 17 Novembre 1983,

## Description

La présente invention concerne le domaine des moteurs à combustion interne mono ou multi-cylindre.

Les moteurs concernés comprennent essentiellement, de façon classique, au moins un cylindre définissant avec un piston une chambre de combustion. L'injection de carburant peut être faite directement dans la chambre de combustion ou non.

Il est connu de relier le carter-pompe, qui contient des gaz sous pression, à un réservoir (ou capacité) dit de stockage de pression.

Selon le document FR 2 575 523, ce réservoir est relié à un moyen d'injection de carburant afin de réaliser une injection pneumatique de carburant dans la chambre de combustion.

On connait aussi, par le document EN. 93/06785 (correspond à EP-A-0 628 701; art antérieur sous l'article 54(3) CBE), une capacité sous pression destinée à renforcer l'étanchéité au niveau des queues de soupape, ladite capacité étant reliée au conduit d'admission.

Cet art antérieur connu révèle donc des capacités sous pression qui permettent de réaliser différentes fonctions liées directement à l'alimentation dans la chambre de combustion.

Par ailleurs les systèmes de freinage utilisés couramment sur les véhicules automobiles actuels sont hydrauliques, actionnés par la force exercée par le conducteur sur la pédale de frein. Cette force peut être significativement amplifiée par la présence d'un servo-frein. Dans un servo-frein, une dépression est utilisée pour amplifier la force développée sur la pédale.

Selon le type de moteur utilisé, la dépression a des origines différentes
- pour les moteurs 4 temps à allumage commandé, lorsqu'on est dans des conditions de freinage, c'est-à-dire pied levé de l'accélérateur, le moteur est vanné par le papillon des gaz. Il en résulte une dépression dans le collecteur admission en aval du papillon des gaz. C'est cette dépression qui est mise en communication avec le servo-frein et utilisée comme amplificateur. La dépression est de 400 à 700 mbar suivant les conditions moteur au moment du feinage.
- Concernant les moteurs diesels utilisés en automobile ; ces moteurs fonctionnent à faible charge et donc dans les conditions de freinage (pied levé de l'accélérateur) avec des débits d'air importants et donc des dépressions dans le collecteur d'admission très faibles. La dépression au niveau du collecteur ne peut donc pas être utilisée pour le servo-frein. Il est nécessaire d'ajouter une pompe à vide spécifique pour ce rôle d'assistance au freinage (dépression de 500 à 900 mbar). Cette pompe à vide constitue donc un élément supplémentaire du véhicule qui engendre des problèmes de coût, d'encombrement, de consommation électrique si une pompe électrique est nécessaire, d'entrainement par courroie si l'entrainement est mécanique.

Les moteurs 2 temps qui ont été utilisés dans l'automobile dans le passé (années 1950-1960) équipaient des véhicules sans assistance de freinage.

Le moteur 2 temps est aujourd'hui à nouveau en développement pour des applications automobiles. Il apparaît qu'avec les moteurs 2 temps à carter-pompe en particulier, la dépression admission reste faible même dans les cas où le pied est levé de l'accélérateur, c'est-à-dire papillon des gaz fermé. Elle est seulement d'environ 100 à 150 mbar. En ce sens le moteur 2 temps actuel se rapproche du moteur Diesel puisque cette dépression admission n'est pas suffisante pour être utilisée comme assistance au freinage.

Il est donc généralement utilisé sur les moteurs 2 temps automobile en développement une pompe à vide additionnelle et spécifique pour remplir cette fonction de dépression pour l'assistance au freinage. De tels moteurs 2 temps automobile qui nécessitent cet accessoire supplémentaire, présentent donc tous les inconvénients cités plus haut en relation avec les moteurs Diesel 4 temps.

La présente invention permet de remédier notamment à ces problèmes puisqu'elle évite la présence d'une pompe à vide ou d'un compresseur additionnel pour remplir notamment la fonction d'assistance au freinage.

La présente invention concerne un moteur à combustion interne ayant au moins un piston coulissant dans un cylindre, au moins une chambre de combustion et un réservoir de stockage d'air ou de gaz comprimé relié à au moins un volume comprimé par le mouvement dudit piston via un moyen de connexion équipé d'un dispositif anti-retour permettant de stocker dans ledit réservoir un gaz à une pression supérieure ou égale à celle du volume comprimé.

Ledit volume peut être constitué d'un carter-pompe ou bien de ladite chambre de combustion.

Conformément à l'invention, le gaz sous pression présent dans ledit réservoir réalise une fonction autre que celle liée à l'alimentation de la chambre de combustion.

Préférentiellement, le moteur selon l'invention comprend en outre un moyen pour combiner une dépression à l'admission avec la pression dans ledit réservoir.

Avantageusement, ledit gaz sous pression dans ledit réservoir est utilisé pour réaliser une fonction d'assistance au freinage dans un servo-frein SF.

Alternativement, le gaz sous pression dans ledit réservoir peut être utilisé pour réaliser une injection dudit gaz dans un conduit d'échappement du moteur.

Le gaz sous pression présent dans le réservoir peut en outre être utilisé pour réaliser une injection pneumatique de carburant dans une chambre de combustion.

En outre, le moteur comprend un moyen destiné à diminuer la quantité de lubrifiant susceptible d'être véhiculé dans ledit moyen de connexion.

Sans sortir du cadre de l'invention, le moteur selon l'invention comprend en outre un moyen destiné à augmenter la pression maximale existant dans ledit carter-pompe à certains moments du cycle de fonctionnement.

Le moteur selon l'invention peut en outre comprendre un dispositif de détection d'une variation de pression dans ledit réservoir, coopérant avec un dispositif de réglage de l'injection de carburant dans la chambre de combustion afin de contrôler de façon continue la richesse du mélange injecté dans la chambre de combustion.

Les moteurs dans lesquels l'invention peut préférentiellement être mise en oeuvre sont essentiellement les moteurs à injection directe, les moteurs 2 temps à carter-pompe et les moteurs multicylindre comprenant plusieurs moyens de connexion reliant chacun un carter-pompe au réservoir de stockage, et chacun équipé d'un dispositif anti-retour.

D'autres caractéristiques, avantages et détails de l'invention apparaîtront mieux à la lecture de la description qui va suivre, faite à titre illustratif et nullement limitatif en référence aux figures annexées sur lesquelles :
- la figure 1 est une coupe schématique simplifiée d'un moteur selon un mode de réalisation de l'invention;
- la figure 2A est une coupe simplifiée d'un servo-frein utilisé selon l'invention dans une position de fonctionnement; et
- la figure 2B est une coupe simplifiée d'un servo-frein utilisé selon l'invention dans une autre position de fonctionnement.

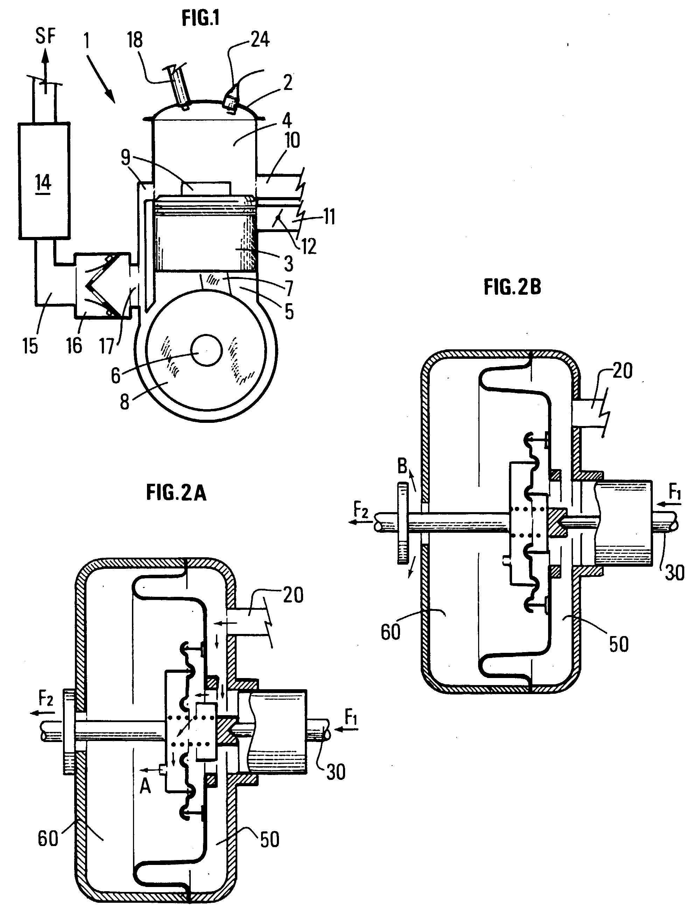

La figure 1 concerne plus précisément un moteur 2 temps à carter-pompe dont le cylindre 1 est fermé, à sa partie supérieure, par une culasse 2. Un piston 3 se déplace à l'intérieur du cylindre et délimite une chambre de combustion 4 entre sa surface supérieure et la surface inférieure de la culasse 2.

Un carter-pompe 5 est disposé dans le prolongement de la chambre 4 du cylindre, en-dessous du piston 3. Le carter-pompe 5 est traversé par le vilebrequin 6 du moteur, dans une direction perpendiculaire à l'axe du cylindre. Le vilebrequin 6, solidaire d'un volant d'inertie 8, est relié au piston 3, par l'intermédiaire d'une bielle 7.

La paroi du cylindre 1 est traversée par des ouvertures de transfert 9 communiquant avec le volume intérieur du carter-pompe 5 et débouchant dans la chambre de combustion 4.

La paroi du cylindre est également traversée, au niveau de la chambre de combustion 4, par des ouvertures d'échappement 10 permettant l'évacuation des gaz brûlés dans la chambre de combustion 4. Les ouvertures 9 et 10 qui se trouvent dans la partie du cylindre balayée par le piston 3 sont susceptibles d'être masquées par le piston, pendant certaines phases de fonctionnement du moteur.

Un conduit d'entrée d'air 11 dans lequel peut être disposé un clapet 12 débouche dans la partie supérieure du carter-pompe, dans une zone située dans le prolongement de la chambre de combustion 4.

Le piston 3 permet d'assurer l'aspiration d'air atmosphérique par le conduit 11, le clapet 12 étant ouvert, pendant son déplacement entre son point mort bas et son point mort haut.

L'air introduit dans le carter-pompe 5 est comprimé par le piston 3, pendant le déplacement du piston entre son point mort haut et son point mort bas.

Une partie de l'air introduit dans le carter-pompe 5 et comprimé par le piston 3 est introduite dans la chambre de combustion 4 par les ouvertures de transfert 9, les gaz brûlés dans la chambre de combustion 4 étant évacués par les ouvertures d'échappement 10.

Le moteur comporte une capacité d'air comprimé 14 communiquant avec le volume intérieur du carter-pompe 5, par l'intermédiaire d'un conduit 15 sur lequel est placé un clapet 16 fixé sur le carter-pompe, au niveau d'une ouverture 17 de traversée de sa paroi.

Une partie de l'air comprimé dans le carter-pompe 5, pendant le déplacement du piston 3 vers son point mort bas, est envoyée dans la capacité 14, l'ouverture du clapet 16 étant assurée par la pression de l'air à l'intérieur du carter 5.

Autrement dit, le clapet 16 s'ouvre lorsque la pression à l'intérieur du carter-pompe 5 est supérieure à la pression dans la capacité 14.

Lorsque la pression dans le carter-pompe 5 descend en-dessous d'une certaine valeur, lors de l'ouverture des lumières de transfert 9 pendant la descente du piston, le clapet 16 se referme, de sorte que la capacité 14 renfermant une réserve d'air comprimé est isolée du carter-pompe.

Ainsi par la descente du piston, le gaz contenu dans le carter 5 est comprimé et sa pression augmente. Lorsque la pression dans le réservoir 14 devient inférieure à la pression maximale atteinte dans le carter 5, celui-ci alimente alors en air comprimé le réservoir 14. La pression dans le réservoir 14 est donc égale ou voisine à la pression maximale atteinte dans le carter-pompe. Cette pression maximale peut être de 300 à 700 mbar (en général) au-dessus de la pression atmosphérique. Cette valeur dépend de plusieurs paramètres dont le taux de compression du carter-pompe et les conditions de fonctionnement du moteur.

Dans le moteur suivant l'invention, la capacité d'air comprimé 14 peut être utilisée pour alimenter un système servofrein de façon inverse à ce qui est utilisé conventionnellement ; l'air comprimé servant, selon l'invention, à amplifier l'effet de freinage dû à l'action sur la pédale du conducteur.

En d'autre terme selon un mode particulier de réalisation, la présente invention permet dans un moteur 2 temps ou 4 temps à carter-pompe, de prélever une partie de l'air comprimé par le carter-pompe dans une capacité 14 de stockage d'air sous pression à une pression d'environ 400 à 600 mbar au-dessus de la pression atmosphérique, et d'utiliser cette pression positive comme assistance au freinage en faisant fonctionner un servofrein, non pas avec une différence de pression entre l'atmosphère et une dépression, mais avec une différence de pression entre la pression positive stockée et l'atmosphère et/ou une dépression à l'admission.

On ne sortira pas du cadre de l'invention si le réservoir d'air comprimé 14 est utilisé comme assistance pour d'autres fonctions où la dépression créée à l'admission (ou par une pompe à vide) est utilisée, ainsi que pour des fonctions où un besoin d'air comprimé est nécessaire.

Par exemple, le dispositif suivant l'invention peut permettre l'injection d'air à l'échappement du moteur (technique connue pour amorcer plus rapidement un catalyseur pendant la phase de démarrage du moteur) sans nécessiter de pompe à air spécifique pour cette fonction.

L'air comprimé peut être avantageusement utilisé pour aider à pulvériser du lubrifiant et ainsi alimenter un système d'injection pneumatique de lubrifiant à l'admission du moteur, ou encore dans le carter-pompe du moteur ou directement sur les roulements de vilebrequin, de bielle et d'axe de piston.

L'air comprimé peut en outre être avantageusement utilisé pour alimenter un système d'injection pneumatique de carburant.

D'autre part, des dispositifs de contrôle aérodynamique du moteur (contrôle par vannage des conduits de transfert et/ou d'échappement) peuvent avoir l'effet supplémentaire d'augmenter la pression de l'air comprimé stocké.

Dans le cas de l'exemple d'utilisation de l'air comprimé pour assistance de freinage, le dimensionnement du réservoir 14 sera choisi de manière à satisfaire les exigences de freinage, par exemple, de manière à permettre deux ou trois freinages successifs sans perdre l'effet d'assistance.

Il en sera de même pour les autres utilisations de cet air comprimé.

Le principe suivant l'invention s'applique plus particulièrement aux moteurs 2 temps à carter-pompe et à introduction séparée du carburant directement dans le cylindre ou la chambre de combustion. En effet dans ce cas, le carter-pompe ne contient que de l'air et éventuellement de très faibles quantités de lubrifiant, alors que dans le cas d'un moteur 2 temps à carburateur dans l'admission, le carter-pompe contiendrait de l'air et du carburant. Ce mélange air-carburant serait difficilement utilisable comme source de gaz comprimé sans pollution par le carburant lors de l'évacuation du gaz comprimé à l'atmosphère (lors d'un freinage par exemple).

De même, pour éviter que la très faible quantité de lubrifiant qui pourrait être présente dans le carter-pompe, ne transite dans le réservoir 14, il est possible soit de choisir judicieusement la position de la connection 17 dans le carter-pompe 5 de façon à empêcher l'entrainement du lubrifiant, soit de prévoir un système de piégeage de l'huile : par exemple des chicanes associées à un drainage de façon à recycler l'huile vers le carter-pompe 5, soit de prévoir un dispositif de recyclage du lubrifiant accumulé dans un point bas du réservoir 14 vers le carter-pompe, en utilisant la pression dans le réservoir 14 telle que divulguée dans la demande de brevet français EN. 93/06784.

Dans le cas d'un moteur 2 temps multicylindre, un seul réservoir d'air comprimé 14 peut être plus intéressant qu'un réservoir par cylindre. Dans ce cas le réservoir 14, commun aux différents cylindres, peut avoir une connection 15 et un système anti-retour 16 avec chacun des carter-pompes 5.

Si l'on veut encore améliorer l'effet d'assistance au freinage, il est possible de combiner à l'effet de pression positive obtenu selon l'invention, un effet de dépression à l'admission, de l'autre côté du système servo-frein d'assistance. En effet la dépression admission d'un moteur 2 temps, qui est de l'ordre de 100-150 mbar, est trop faible pour être utilisée seule mais elle peut s'ajouter à l'effet de pression obtenu selon l'invention (400 à 700 mbar) pour obtenir un écart de pression plus important (500 à 850 mbar) en combinant les deux effets.

Les figures 2A et 2B illustrent plus en détail cette mise en oeuvre de l'invention dans un servo-frein SF destiné, de façon connue, à amplifier la force F1 appliquée sur la pédale de frein en une force F2 appliquée au maître-cylindre.

La figure 2A représente le servo-frein lorsque la pédale de frein n'est pas actionnée tandis que la figure 2B montre le servofrein SF en position de freinage.

Selon l'invention un conduit 20 assure la liaison entre la capacité sous pression 14 et l'une des deux zones 50 du servofrein SF.

De façon classique, le servo-frein SF comprend une seconde zone 60 coopérant avec un moyen (non référencé) agissant sur le maître-cylindre du système de freinage.

La zone 50 coopère avec un moyen 30 lié à la pédale de frein.

Dans le cas de la figure 2A c'est-à-dire lorsque le conducteur du véhicule n'exerce aucune force sur la pédale de frein, les pressions P dans les zones 50 et 60 sont sensiblement égales à la pression maxi dans le carter-pompe c'est-à-dire celle du réservoir sous pression 14 grâce à une liaison représentée par les flèches A.

Quand la pédale de frein est actionnée (figure 2B), une force F1 s'exerce selon la flèche sur le moyen 30 et la zone 50 reste à la pression P tandis que la zone 60 est mise à une pression soit égale à la pression atmosphérique, soit égale à la dépression admission via la liaison représentée par les flèches B. Autrement dit la liaison A est coupée tandis qu'une liaison B est établie.

Ainsi, la zone 50 se trouve à une pression P∼1400 à 1700 mbar, pression supérieure à celle de la zone 60 qui elle se trouve au plus égale à la pression atmosphérique.

De façon particulière, lorsque la présente invention réalise une fonction dédiée au freinage, lors d'un ou plusieurs freinages successifs, de l'air comprimé du réservoir 14 va être consommé, entrainant un prélèvement automatique d'air comprimé fourni par le carter-pompe 5. Il peut en résulter une diminution de la pression de l'air comprimé allant dans le cylindre (via les conduits de transfert) et donc un enrichissement momentané du mélange enfermé dans la chambre de combustion, et ce pendant un ou plusieurs cycles de combustion.

Pour éviter ce phénomène d'enrichissement, on peut prévoir une correction de la quantité de carburant injectée en proportion à cette réduction d'air admis dans le cylindre. Cela peut facilement être réalisé par un système de gestion électronique du moteur. Par exemple avec un capteur de pression dans le réservoir 14, il est possible d'identifier les cycles de fonctionnement où le réservoir 14 est en phase de remplissage, et ainsi de corriger la quantité de carburant injecté en conséquence.

Enfin une solution particulièrement avantageuse du dispositif suivant l'invention est d'utiliser l'air comprimé fourni par le carter-pompe pour plusieurs fonctions, c'est-à-dire par exemple de combiner l'utilisation pour assistance de freinage avec une utilisation comme source d'air comprimé pour alimenter un dispositif d'injection pneumatique du carburant dans la chambre de combustion.

Des dispositifs additionnels sur le moteur comme le vannage de l'échappement à charge partielle, ou le vannage des transferts ont un effet très favorable selon l'invention puisqu'ils augmentent généralement le pic de pression carter-pompe à charge partielle, et donc le niveau de pression qui pourrait être stocké dans le réservoir 14.

L'invention est bien entendu applicable aux moteurs 4 temps à carter-pompe, et n'est pas seulement limitée aux moteurs 2 temps, bien que l'intérêt soit à priori plus grand pour les moteurs 2 temps.

## Revendications

1. Moteur à combustion interne ayant au moins un piston coulissant dans un cylindre, au moins une chambre de combustion (4) et un réservoir (14) de stockage d'air ou de gaz comprimé relié à un volume comprimé par le mouvement dudit piston via un moyen de connexion équipé d'un dispositif anti-retour (16) permettant de stocker dans ledit réservoir (14) un gaz à une pression supérieure ou égale à celle du volume comprimé (5), caractérisé en ce que le gaz sous pression présent dans ledit réservoir (14) réalise une assistance au freinage dans un servo-frein (SF) ou une injection dudit gaz dans un conduit d'échappement du moteur ou une injection pneumatique de lubrifiant dans l'admission ou le carter-pompe du moteur, ou directement sur des éléments rotatifs tels que des roulements.

2. Moteur selon la revendication 1, caractérisé en ce que ledit volume comprimé comprend un carter-pompe ou la chambre de combustion.

3. Moteur selon la revendication 2, caractérisé en ce qu'il comprend en outre un moyen pour combiner une dépression à l'admission avec la pression dans ledit réservoir (14).

4. Moteur selon l'une quelconque des revendications précédentes, caractérisé en ce que ledit gaz sous pression dans ledit réservoir est en outre utilisé pour réaliser une injection pneumatique de carburant dans une chambre de combustion (4).

5. Moteur selon l'une quelconque des revendications précédentes, caractérisé en ce qu'il comprend en outre un moyen destiné à diminuer la quantité de lubrifiant susceptible d'être véhiculé dans ledit moyen de connexion.

6. Moteur selon la revendication 5, caractérisé en ce que ledit moyen consiste en une disposition dudit moyen de connexion vis à vis dudit carter-pompe.

7. Moteur selon la revendication 5, caractérisé en ce que ledit moyen consiste en une chicane. coopérant avec un moyen de drainage disposé sur ledit moyen de connexion.

8. Moteur selon l'une quelconque des revendications précédentes, caractérisé en ce qu'il comprend en outre un moyen destiné à augmenter la pression maximale existant dans ledit carter-pompe à certains moments du cycle de fonctionnement.

9. Moteur selon la revendication 8, caractérisé en ce que ledit moyen consiste en un dispositif de contrôle de la section de passage. placé dans un conduit de transfert et/ou dans une tubulure d'échappement.

10. Moteur selon l'une quelconque des revendications précédentes, caractérisé en ce qu'il comprend en outre un dispositif de détection d'une variation de pression dans ledit réservoir (14), coopérant avec un dispositif de réglage de l'injection de carburant dans la chambre de combustion (4) afin de contrôler de façon continue la richesse du mélange injecté dans la chambre de combustion (4).

11. Moteur selon l'une quelconque des revendications précédentes, caractérisé en ce qu'il comprend une injection directe de carburant dans ladite chambre de combustion.

12. Moteur selon l'une quelconque des revendications 1 à 10, caractérisé en ce qu'il consiste en un moteur 2 temps.

13. Moteur selon l'une quelconque des revendications 1 à 10, caractérisé en ce qu'il comprend plusieurs cylindres, plusieurs moyens de connexion reliant chacun un carter-pompe (5) audit réservoir de stockage (14) et chacun équipé d'un dispositif anti-retour (16).

## Patentansprüche

1. Brennkraftmaschine mit wenigstens einem in einem Zylinder gleitenden Kolben, wenigstens einer Verbrennungskammer (4) und einem Reservoir (14) zum Speichern von Luft oder komprimiertem Gas, verbunden mit einem komprimierten Volumen durch die Bewegung dieses Kolbens über ein Verbindungsmittel, das mit einer Rückschlageinrichtung (16) ausgestattet ist, die es ermöglicht, in diesem Reservoir (14) ein Gas bei einem Druck größer oder gleich dem des komprimierten Volumens (5) zu speichern, dadurch gekennzeichnet, daß das in dem Reservoir (14) unter Druck vorhandene Gas eine Bremsunterstützung in einer Servobremse (SF) oder eine Injektion dieses Gases in eine Auslaßleitung des Motors oder eine pneumatische Injektion von Schmiermittel in diese Speisung oder die Gehäuse-Pumpe des Motors oder direkt auf drehende Elemente wie Lager realisiert.

2. Brennkraftmaschine nach Anspruch 1, dadurch gekennzeichnet, daß dieses komprimierte Volumen eine Gehäuse-Pumpe oder die Brennkammer umfaßt.

3. Brennkraftmaschine nach Anspruch 2, dadurch gekennzeichnet, daß sie im übrigen ein Mittel zur Kombination eines Unterdrucks zur Speisung mit dem Druck in diesem Reservoir (14) umfaßt.

4. Brennkraftmaschine nach einem der vorhergehenden Ansprüche, dadurch gekennzeichnet, daß dieses unter Druck stehende Gas in diesem Reservoir im übrigen verwendet wird, um eine pneumatische Injektion von Kraftstoff in eine Verbrennungskammer (4) zu realisieren.

5. Brennkraftmaschine nach einem der vorhergehenden Ansprüche, dadurch gekennzeichnet, daß sie im übrigen ein Mittel umfaßt, das dazu bestimmt ist, die Menge an Schmiermittel zu vermindern, das in der Lage ist, in diesem Verbindungsmittel transportiert zu werden.

6. Brennkraftmaschine nach Anspruch 5, dadurch gekennzeichnet, daß dieses Mittel in einer Anordnung dieses Verbindungsmittels gegenüber der Gehäuse-Pumpe besteht.

7. Brennkraftmaschine nach Anspruch 5, dadurch gekennzeichnet, daß dieses Mittel in einer Schikane besteht, die mit einem Abflußmittel zusammenwirkt, das auf diesem Verbindungsmittel angeordnet ist.

8. Brennkraftmaschine nach einem der vorhergehenden Ansprüche, dadurch gekennzeichnet, daß sie im übrigen ein Mittel umfaßt, das dazu bestimmt ist, den maximal in dieser Gehäuse-Pumpe in gewissen Augenblicken des Arbeitszyklus existierenden Druck zu erhöhen.

9. Brennkraftmaschine nach Anspruch 8, dadurch gekennzeichnet, daß dieses Mittel in einer Regeleinrichtung für den Durchlaßquerschnitt besteht, das in einer Überführungsleitung und/oder einem Auslaßstutzen angeordnet ist.

10. Brennkraftmaschine nach einem der vorhergehenden Ansprüche, dadurch gekennzeichnet, daß sie im übrigen eine Einrichtung zur Erfassung eine Druckveränderung in diesem Reservoir (14) umfaßt, die mit einer Vorrichtung zur Einstellung der Einspritzung von Kraftstoff in die Verbrennungskammer (4) zusammenwirkt, um in kontinuierlicher Weise die Reichheit des in die Verbrennungskammer (4) injizierten Gemisches zu regeln.

11. Brennkraftmaschine nach einem der vorhergehenden Ansprüche, dadurch gekennzeichnet, daß sie eine direkte Injektion von Kraftstoff in diese Brennkammer umfaßt.

12. Brennkraftmaschine nach einem der Ansprüche 1 bis 10, dadurch gekennzeichnet, daß sie aus einem Zweitaktmotor besteht.

13. Brennkraftmaschine nach einem der Ansprüche 1 bis 10, dadurch gekennzeichnet, daß sie mehrere Zylinder, mehrere Verbindungsmittel, die je eine Gehäuse-Pumpe (5) mit diesem Speicherreservoir (14) verbindet und je mit einer Rückschlagseinrichtung (16) ausgestattet ist.

## Claims

1. An internal combustion engine having at least one piston sliding in a cylinder, at least one combustion chamber (4) and a storage tank (14) for compressed air or gas linked to a volume compressed by the displacement of said piston via a connection means fitted with a non-return device (16) allowing a gas to be stored in said tank (14) at a pressure greater than or equal to that of the compressed volume (5), characterised in that the pressurised gas present in said tank (14) performs a function other than that associated with charging the combustion chamber (4), such as assisted braking in a servo-brake (SF) or injection of said gas into an exhaust pipe of the engine or pneumatic injection of lubricant into the intake or crankcase of the engine, or directly onto the rotary elements such as the bearings.

2. An engine as claimed in claim 1, characterised in that said compressed volume is a crankcase or the combustion chamber.

3. An engine as claimed in claim 2, characterised in that it has another means for combining a negative pressure at the intake with the pressure in said tank (14).

4. An engine as claimed in any one of the preceding claims, characterised in that said pressurised gas in said tank is also used for pneumatically injecting fuel into a combustion chamber (4).

5. An engine as claimed in any one of the preceding claims, characterised in that it also has a means designed to reduce the quantity of lubricant likely to be carried into said connection means.

6. An engine as claimed in claim 5, characterised in that said means consists of the way in which the connection is positioned relative to the crankcase.

7. An engine as claimed in claim 5, characterised in that said means consists of a baffle co-operating with a draining means arranged on said connection means.

8. An engine as claimed in any one of the preceding claims, characterised in that it also has a means designed to increase the maximum pressure existing in said crankcase at certain times of the working cycle.

9. An engine as claimed in claim 8, characterised in that said means consists of a device for controlling a passage section, positioned in a transfer passage and/or in an exhaust pipe.

10. An engine as claimed in any one of the preceding claims, characterised in that it also has a device for detecting a pressure variation in said tank (14), co-operating with a device for regulating the injection of fuel into the combustion chamber (4) in order to control continuously the richness of the mixture injected into the combustion chamber (4).

11. An engine as claimed in any one of the preceding claims, characterised in that fuel is injected directly into said combustion chamber.

12. An engine as claimed in any one of claims 1 to 10, characterised in that it is a two-stroke engine.

13. An engine as claimed in any one of claims 1 to 10, characterised in that it has several cylinders and several connection means each linking a crankcase (5) to said storage tank (14) and each being fitted with a non-return device (16).
